# EUROPEAN PATENT APPLICATION

(11) **EP 4 140 854 A1**
(43) Date of publication of application: **01.03.2023**
(21) Application number: 21728268.0
(22) Date of filing: 23.04.2021
(51) Int. Cl.: B62B 1/12, B62B 3/00, B62B 5/00, B62B 5/04, B62B 5/06, B62B 5/08

(54) **HANDCART**

(30) Priority: 24.04.2020 ES 202030714 U
(71) Applicant: Perramón Ferrán, Xavier, 08243 Manresa (Barcelona) (ES)
(72) Inventor: Perramón Ferrán, Xavier, 08243 Manresa (Barcelona) (ES)
(74) Representative: Herrero & Asociados, S.L.
(86) International application number: PCT/ES2021/070272
(87) International publication number: WO 2021/214367

(57) **Abstract**

The handcart comprises a frame (1), wheels (2) and a motor (8) that drives the rotation of said wheels (2), in which the number of wheels (2) is two.

The handcart may comprise a platform (12) coupled to the frame (1), comprising a base (14) and a vertical structure (15).

It allows providing a self-propelled handcart with two wheels and a variable length chassis that is as simple as possible, safe to use and inexpensive to purchase.

## Description

The present invention relates to a self-propelled variable-length frame handcart for handling cantilevered loads with standing operator or with the operator mounted on a platform.

### Background of the invention

There is a range of handcarts that are used in a wide variety of industries. These handcarts have two wheels and are intended, among other tasks, for the transport and handling of loads when said loads do not exceed 50 kg in weight and on flat and hard ground.

These handcarts can be operated without the assistance of a motor or propulsion system, since the force of one person allows the truck to be operated efficiently and safely.

When the loads are greater than 50 kg and are handled on unprepared ground, handling of said loads with only manual force becomes increasingly difficult, tiring and dangerous, as an over-effort is necessary that the person cannot perform safely. This carries the risk of the operator being injured or having an accident if the truck is destabilized due to insufficient operator control of the steering and movement of the truck.

Therefore, to move a load of 50 kg with a two-wheeled handcart, only the physical strength of the operator is available, wherein the first drawback of these trucks is their little use and lack of safety when the load is greater than the 50 kg.

Another drawback of two-wheeled handcarts and, therefore, their little use for loads over 50 kg, is the small diameter of the wheels, and that, as a consequence of their small diameter, the truck sinks or gets stuck on soft ground or it is very difficult to overcome ramps, making its movement very difficult for transporting the load. In addition, it does not allow climbing small curbs or driving over uneven ground with potholes as the wheel penetrates the potholes and the truck gets stuck, which makes it destabilize causing an accident risk.

There are trucks also known for handling and transporting loads of more than 150 kg and up to 300 kg that, that due to their specific application require greater stability and at the same time traction, that is, they require a four-wheeled chassis system with front wheels drive and two rear wheels being smaller in diameter that rotate freely, called self-propelled four-wheeled handcarts.

Said self-propelled handcarts use four wheels arranged in a position that forms a rectangle (two front wheels and two rear wheels being smaller in diameter in parallel position), they transport the load on the four-wheeled chassis unlike the truck of the present invention that does so with the cantilevered load and on a chassis that only needs two wheels.

The use of the four wheels is necessary because it is the only way to give them the stability that is needed by placing the weight of the load on the 4 wheels so that they are safe and effective when handling a load of more than 150 kg and up to 300 kg of weight.

These four-wheeled handcarts have the disadvantage that their weight is high. Furthermore, these self-propelled four-wheeled handcarts have a reduced wheel diameter, just like the non-self-propelled two-wheeled handcarts. Therefore, they can only be used on flat, hard surfaces, and consequently are not useful on uneven surfaces.

It should also be noted that its design for being to carry a load of up to 300 kg requires a complex and heavy design and, therefore, it is more expensive for carrying and handling a load of up to 150 kg than with a non-self-propelled two-wheeled handcart.

In addition, self-propelled four-wheeled handcarts designed to carry up to 300 kg weigh more and are more sophisticated than a self-propelled two-wheeled handcart, since self-propelled two-wheeled handcarts like the one in the invention being filed are less sophisticated and heavy because they are designed to carry a much smaller load, of up to 150 kg, not being necessary to use four wheels to maintain stability during load handling.

### Description of the invention

Therefore, an object of the present invention is to provide a self-propelled handcart with two wheels and a variable-length chassis being as simple as possible, safe to use and inexpensive to purchase.

With the handcart of the invention it is possible to solve the aforementioned drawbacks, presenting other advantages that will be described below.

The handcart according to the present invention comprises a variable-length frame, wheels and a motor that drives the rotation of said wheels, wherein the number of wheels is two.

Advantageously, said two wheels are connected to a gear transmission and this transmission to an electric motor, the wheels being placed side by side substantially parallel to each other.

Preferably, the transmission from the motor to the wheels is carried out by means of first and second transmission elements that also act as a reduction from the motor to the wheel.

According to a preferred embodiment, the motor is an electric motor powered by a battery, and said motor is connected to an electronic controller to regulate its power. Advantageously, the wheels comprise a tire, and the wheels have a diameter of between 40 and 50 cm.

Furthermore, in the handcart according to the present invention, the variable-length frame comprises a pair of curved or straight extensible beams located at the top of said frame.

The aforementioned two extendable beams allow the distance between the person and the center of gravity of the load to be increased or decreased, allowing the lever force to be adjusted as required by the operator, allowing the operator to handle the load safely and easily

If desired, in the curved design version of the two extendable beams, it allows the height of the upper end of the two beams to be positioned at an always adequate height so that the operator can hold the handcart in the most correct position, since as the two beams are lengthened the total height of the handcart increases not substantially.

If desired, the handcart according to the present invention comprises a platform coupled to the frame, which preferably comprises freely rotating wheels, and which comprises a base and a vertical structure.

According to the present invention, a self-propelled handcart is provided that has a reduced cost, allowing heavy load moving jobs that are usually performed in a very tiring and risky way by using non-self-propelled two-wheeled handcarts.

Consequently, the handcart according to the present invention allows its application in various sectors such as construction, agriculture, gardening, industry, transportation and home distribution / delivery of household appliances, furniture, heavy sacks or packages, facilitating and minimizing the manual effort. This also results in a reduction in working times with the consequent economic savings that this entails, and the minimization of injuries due to extreme physical efforts resulting in better health at work and a reduction in occupational accidents.

Furthermore, the handcart according to the present invention is simplified by reducing its number of parts, which has an effect on a reduction in costs, as well as assembly, maintenance and repair times in relation to the so-called self-propelled four-wheeled trucks.

### Brief description of the drawings

For a better understanding of what has been stated, some drawings are attached in which, schematically and only as a non-limiting example, a practical case of embodiment is represented.

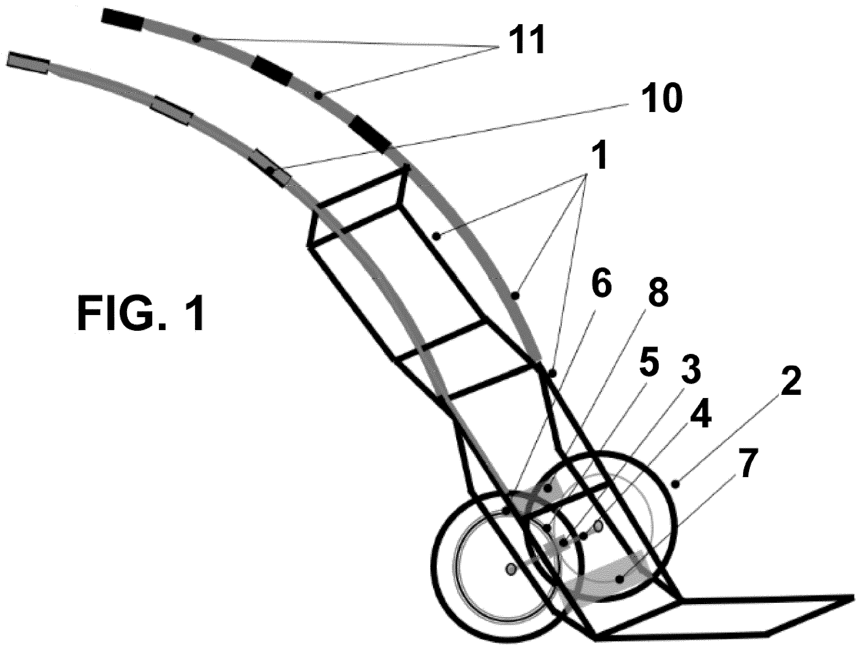

Figure 1 is a schematic perspective view of the self-propelled handcart according to the present invention; and
Figure 2 is a schematic perspective view of the self-propelled handcart according to the present invention, which includes a platform.

### Description of a preferred embodiment

The self-propelled handcart according to the present invention comprises a frame 1, a transmission system and two wheels 2, which will be described below.

The self-propelled handcart comprises a variable-length frame that comprises two extendable beams 11, with which it is possible to lengthen the frame 11, achieving a greater lever force.

The two extendable beams 11, one on each side of the frame 1, unfold telescopically, so that the operator can adjust the lever distance to the extent that suits him/her best, allowing the total distance of frame 1 to be adjusted easily depending on the of the weight of the load to be handled.

In the handcart according to the present invention, it can be moved by a first transmission system of simplified design and another second transmission system that is more sophisticated.

The first transmission system comprises an electric motor 8 powered by a battery 7 that drives a first transmission element 6, such as a pinion or pulley, which is connected to a second transmission element 5, such as a ring gear or a belt..

This second transmission element 5 is integral, coupled inside one of the two wheels 2, in such a way that it can transmit the movement to the other wheel 2 through bearings of an shaft 4 that connects both wheels 2.

This way of driving the rotation of the two wheels 2 by means of a single motor 8 connected to one of the wheels 2 makes it possible to simplify the transmission system.

This shaft 4 preferably comprises two bearings that connect the two wheels 2 integrally by means of a connecting element 3 that connects both bearings, making them a single shaft 4 that causes the two wheels 2 to rotate jointly at the same speed of rotation.

However, and in order that the two wheels 2 can rotate according to the path they take when the truck has to turn to the right or to the left, the bearings can be manually disconnected by the operator using an actuator cable on the connection-disconnection element 3, or automatically by means of an electromagnet on the connection element 3 when it intends to rotate the direction of the truck.

In this way, by disconnecting the two bearings from each other so that one can rotate at a different speed from the other, it is achieved that each wheel 2 can rotate depending on the path and movement that it should make on the ground and in accordance with the arc and radius of rotation described by the truck.

Depending on whether the rotation is to the right or to the left, the motor 8 will go at a different speed so that the rotating speed is the same when rotating to the right or to the left. In this way, it is achieved that the rotating operation is the same, and also that the solution is achieved with a very low power motor while generating maximum torque, since this motor 8 is connected on the outside of the diameter wheel 2 where the least effort must be made to move both wheels.

In this way, a form of reduction is achieved without having to use a higher power motor or using a gear reduction, achieving a considerable reduction in the number of parts, which is another way to reduce cost, labor and maintenance costs.

As indicated, the first transmission element 6 can be a pulley and the second transmission element 5 can be a belt. In this way, an even greater reduction in cost and complexity is achieved since it is a lower cost part. In addition, this allows for a greasing-free system, minimizing the maintenance that must be performed periodically.

The second transmission system also comprises an electric motor 8 powered by a battery 7, it consists of a differential shaft system that comprises two bearings 4 that connect the two wheels 2 and at the same time the bearings are connected to a central differential gear 3. Likewise the central differential gear is connected to a ring gear (or a pulley) and this in turn is connected by a chain (or a belt) to the gear reduction or reducer that is connected to the electric motor.

In this way, when the truck moves in a straight line, the two traction wheels rotate at the same speed, and by virtue of the central differential gear, the wheels can rotate at different speeds when the truck should rotate or change direction.

With the second transmission system with central differential gear, the change of direction of the truck can be carried out with the force of the operator without having to disconnect the two shafts between them, unlike the first transmission system, simply by manually steering the truck clockwise to turn left, and vice versa, directing the truck to the left to turn right, as is done on the most commonly used manual trucks.

And with the second transmission system with central differential gear, when the truck has the platform that allows the operator to be mounted on the truck attached thereto, the operator changes direction by applying the brake to only one of the wheels by means of an independent brake system for each wheel. In this way, if the right wheel is stopped, the truck rotates to the right as the left wheel will continue to rotate, causing the truck to make a change in direction of its path and that it moves to the right, and the same if the left wheel is stopped, the path change will be to the left

In either of the two transmission systems, first or second, according to the represented embodiment, the transmission system comprises a regulator of the rotational speed of the electric motor (or two independent motors connected to each wheel) 8 by means of an electronic controller 10.

This electronic controller 10 allows the regulation of the power and the rotational speed depending on the difficulty of the load handling operation. For example, when a curb has to be overcome, the operator can regulate the torque and speed of the motor 8 in order to have an ability to overcome slopes far greater than what is required if only a flat surface is to be passed through.

For example, when traveling through tilled ground with great irregularities and a soft ground, the operator can also regulate reducing the turning speed and giving greater torque to the motor 8 so that the wheels 2 can overcome obstacles.

Said electronic controller 10 can incorporate an automatic regulation of power and speed depending on the effort exerted by the operator on the two handles of the truck holding beams, in this way the operator should not be aware of regulating the power and speed when a slope has to be overcome or getting into a soft ground that offers a lot of resistance to the push of the truck.

To protect the motor from mud or moisture from the ground or snow, the electric motor 8 is mounted at a high height, for example about 40 cm from the ground, as shown in the figure.

Additionally, it has been provided for the use of large diameter wheels 2, which offers advantages over small diameter wheels commonly used by handcarts. A large diameter wheel makes it easier to overcome an obstacle (curbs, stones, roots, etc.), it also offers greater adherence or traction to the ground, which allows the truck to be used on slippery surfaces with gravel, snow, ice, mud , etc.

In addition, it is provided for that the operator can easily regulate the pressure of the tires, which can reduce the air pressure, and thus, that the tire becomes low-pressure tires much more suitable for driving on slippery and fragile grounds such as grass.

A tire with larger diameter and greater width, as opposed to a narrow, small diameter one, does not sink as easily on soft ground, nor does it damage the ground as much, or leave as much mark on the ground, while those with a large diameter and greater width have a greater contact surface which distributes the pressure to the ground more evenly, minimizing the inconveniences of a tire with a reduced radius and width, which allows movement on fragile grounds such as grass or semi-set concrete that is not fully hardened.

The self-propelled two-wheeled handcart 2 according to the present invention has very diverse applications, usually in the construction, industry and agriculture and services sector, being intended, among other tasks, for the transport and handling of loads, as well as carrying out cleaning tasks on public roads.

Consequently, the present invention allows its application in various sectors such as construction, agriculture, gardening, industry, transport and home distribution / delivery of electrical appliances, furniture, heavy sacks or packages, facilitating and minimizing manual effort, which also have an effect on a reduction of working times with the consequent economic savings that this entails, and the minimization of injuries due to extreme physical efforts resulting in better health at work and a reduction in occupational accidents.

Furthermore, with the use of different tools or implements or semi-machines, which can be easily coupled, it is possible to convert the handcart into: a self-propelled snow-removing type handcart with the attachment of a blade; or a loader-type self-propelled handcart for the movement of bulk materials (earth, gravel, aggregates, concrete, raw materials, potatoes, compost, seeds, manure, farm / industry / agricultural waste, etc.); or a forklift-type self-propelled handcart for moving palletized loads for use in industry or agriculture (to handle wooden boxes or pallets when picking fruit).

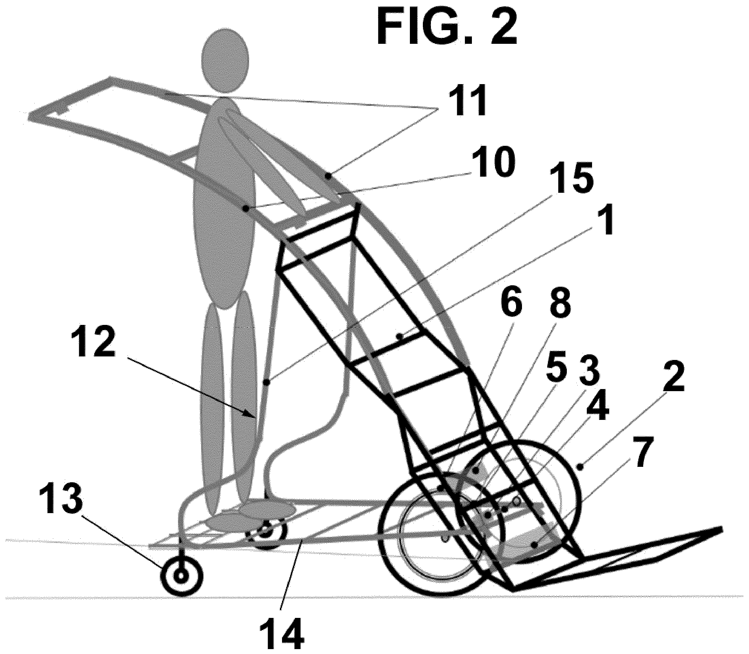

Figure 2 shows the handcart according to the present invention that includes a platform 12.

This platform 12 is coupled to the frame 1 of the handcart and comprises wheels 13 that rotate freely, that is to say, that are not driven. The platform 12 is formed by a base 14 and a vertical structure 15, being able to place a user and, if desired, loads on the base 14.

Although reference has been made to a specific embodiment of the invention, it is clear to a person skilled in the art that the described handcart is susceptible to numerous variations and modifications, and that all the mentioned details can be substituted by other being technically equivalent, without departing from the scope of protection defined by the appended claims.

## Claims

1. Handcart, comprising a frame (1), wheels (2) and a motor (8) that drives the rotation of said wheels (2), **characterized in that** the number of wheels (2) is two.

2. Handcart according to claim 1, wherein said two wheels (2) are connected to each other by means of a shaft (4).

3. Handcart according to claim 2, wherein said shaft (4) comprises two bearings and a connecting element (3), which connects or disconnects said bearings from each other.

4. Handcart according to claim 1, wherein transmission from the motor (8) to the wheels (2) is carried out by means of first and second transmission elements (6, 5).

5. Handcart according to claim 4, wherein the first transmission element (6) is a pinion or a pulley.

6. Handcart according to claim 4, wherein the second transmission element (5) is a ring gear or a belt.

7. Handcart according to claim 1, wherein the motor (8) is an electric motor powered by a battery (7).

8. Handcart according to claim 1, wherein the wheels (2) comprise a tire.

9. Handcart according to claim 1, wherein the wheels (2) have a diameter between 40 and 50 cm.

10. Handcart according to claim 1, wherein said motor (8) is connected to an electronic controller (10) to regulate its power.

11. Handcart according to claim 1, wherein the frame is of variable length (1) and comprises a pair of extensible beams (11) located in the upper part of said frame (1).

12. Handcart according to claim 11, wherein said extensible beams (11) are curved.

13. Handcart according to any one of the preceding claims, comprising a platform (12) coupled to the frame (1).

14. Handcart according to claim 13, wherein the platform (12) comprises wheels (13) that rotate freely.

15. Handcart according to claim 13 or 14, wherein the platform (12) comprises a base (14) and a vertical structure (15).
